# EUROPÄISCHE PATENTSCHRIFT

(11) **EP 2 678 745 B1**
(45) Veröffentlichungstag und Bekanntmachung des Hinweises auf die Patenterteilung: **21.01.2015**
(21) Anmeldenummer: 12705862.6
(22) Anmeldetag: 24.02.2012
(51) Int. Cl.: B65G 43/10, B65G 13/04, B65G 13/071, G05B 19/042, H04L 29/12

(54) **VERFAHREN ZUR EINRICHTUNG EINER FÖRDERVORRICHTUNG**
METHOD FOR SETTING UP A CONVEYING DEVICE
PROCÉDÉ D'INSTALLATION D'UN DISPOSITIF DE TRANSPORT

(30) Priorität: 25.02.2011 DE 102011004802
(43) Veröffentlichungstag der Anmeldung: 01.01.2014
(73) Patentinhaber: Interroll Holding AG, 6592 Sant' Antonio (CH)
(72) Erfinder: HEINEN, Daniel, 42929 Wermelskirchen-Dabringhausen (DE)
(74) Vertreter: Eisenführ Speiser
(86) Internationale Anmeldenummer: PCT/EP2012/053188
(87) Internationale Veröffentlichungsnummer: WO 2012/113922

(56) Entgegenhaltungen:
- EP-A1- 2 068 214
- DE-A1-102009 007 109
- US-A1- 2002 010 527

## Beschreibung

Die Erfindung betrifft ein Verfahren zum Einrichten einer Fördervorrichtung, umfassend eine Mehrzahl von Förderzonen, von denen jede zumindest einen Förderantrieb aufweist und einer Steuerungseinheit zugeordnet ist, die diesen Förderantrieb ansteuert, mit dem Schritt: Verbinden der Steuerungseinheiten untereinander mittels einer Signalbusleitung. Ein weiterer Aspekt der Erfindung ist eine Fördervorrichtung, umfassend eine Mehrzahl von Förderzonen, mit in jeder Förderzone zumindest einem Förderantrieb, der signaltechnisch mit einer der Förderzone zugeordneten Steuerungseinheit gekoppelt ist, einem Signaldatenbus, welcher mit den Steuerungseinheiten signaltechnisch gekoppelt ist.

Fördervorrichtungen der eingangs genannten Art werden für eine Vielzahl unterschiedlicher logistischer Einsatzzwecke verwendet und dienen beispielsweise in Lagersystemen, Verteilersystemen, Kommissionieranlagen oder Pufferlagern für eine schnelle und effiziente Förderung, Sortierung und Lagerung von Produkten. Die Produkte können dabei in Förderbehältern, auf Förderplattformen oder dgl. transportiert, können aber auch ohne solche Hilfsmittel gefördert werden.

Fördervorrichtungen dieser Art werden in sehr unterschiedlichen Konfigurationen eingesetzt. Unter Konfiguration ist hierbei der Aufbau der Fördervorrichtung im Hinblick auf darin vorgesehene Verzweigungen, Zusammenführungen, Ein- und Ausschleusungen, Förderebenen und Anzahl der Hebevorrichtungen von einer Ebene in die andere, Kreuzungen und dgl. zu verstehen. Fördervorrichtungen sind, um dem Bedürfnis an diese variable Konfigurationsmöglichkeit zu entsprechen, in der Regel aus modularen Bauelementen aufgebaut, beispielsweise aus aneinandersetzbaren Geradförderstrecken, Weichen, Ausschleusern, Einschleusern und dgl.

Neben dem solcherart erzielbaren gegenständlichen Aufbau von Fördervorrichtungen stellt die Ablaufsteuerung der Förderung des Förderguts innerhalb der Fördervorrichtung eine wichtige Eigenschaft dar. Diese Ablaufsteuerung muss auf die jeweiligen Bedürfnisse der Fördervorrichtung abgestimmt sein, d.h. die jeweilige Konfiguration, und die damit angestrebten Förderbewegungen berücksichtigen. Fördervorrichtungen sind zu diesem Zweck dafür ausgebildet, dass sie eine entsprechende Programmierung von Steuerungseinheiten, welche den Fördervorgang steuern, umfassen und stellen dem Benutzer Möglichkeiten der Einflussnahme auf diese Programmierung bereit.

Aus der EP 0 718 727 A2 ist ein verteiltes digitales industrielles Steuerungssystem bekannt, das eine Anzahl von separaten Steuerungsmodulen beinhaltet, die miteinander über ein gemeinsames Kommunikationsmedium kommunizieren.

Die US 5,980,078 offenbart ein digitales Steuerungssystem mit einer vorbestimmten Konfiguration, das automatisch eine Verbindung mit einem Netzwerk einer digitalen Vorrichtung erkennt, die nicht Teil der vorbestimmten Konfiguration ist.

Die US 6,185,466 B1 offenbart ein verteiltes digitales Steuerungssystem mit einer Mehrzahl von Steuerungsmodulen, die untereinander mittels einer Kommunikationsverbindung verbunden sind.

Aus US 6,701,214 B1 ist ein Steuerungsnetzwerk für eine modulare Fördereinrichtung bekannt. Dieses Steuerungsnetzwerk umfasst eine Vielzahl von Steuerungen, die jeweils eine Zonensteuerung und eine intelligente Schnittstelle umfassen. Die Zonensteuerung steuert eine Zone der Fördervorrichtung an und die intelligente Schnittstelle dient dazu, um Daten an andere Steuerungseinheiten zu kommunizieren. Dieser Datenaustausch erfolgt adressbasiert. Um die Einrichtung und Inbetriebnahme dieses Steuerungssystems zu erleichtern, sind die Steuerungseinheiten selbstkonfigurierend ausgebildet. Mit dem so bekannten Steuerungssystem wird daher dem Benutzer in einer bestimmten Hinsicht die Einrichtung der Fördervorrichtung erleichtert. Allerdings ist eine Selbstkonfiguration im Hinblick auf viele Fördervorrichtungen, insbesondere wenn diese von komplexerer Struktur sind, nachteilig. So können oftmals individuelle Förderaufgaben nicht umgesetzt werden und Veränderungen an bestehenden Förderanlagen nicht in einer wünschenswert einfachen Weise vorgenommen werden. Darüber hinaus verhindert die Selbstkonfiguration in der Regel, dass eine dem Benutzer logisch erscheinende Adressierung und Parametrierung erfolgt, wodurch dann, wenn eine Fehlfunktion innerhalb der Fördervorrichtung auftritt, die Detektion des fehlerhaften Moduls erschwert wird und dann, wenn das fehlerhafte Modul ermittelt wurde, dessen Austausch, Neuadressierung und-Parametrierung in der Regel einen übermäßigen Aufwand erfordert.

Grundsätzlich werden an moderne Förderanlagen Ansprüche gestellt, die eine Möglichkeit der schnellen und individuellen Konfiguration beinhalten. Oftmals ist es hierbei wünschenswert, die Konfiguration planen und ausführen zu können, bevor die Förderanlage tatsächlich gegenständlich auf- oder umgebaut wird, um hierdurch Ausfallzeiten oder Installationszeiten maßgeblich zu reduzieren. So ist es insbesondere dann, wenn an einer bestehenden und in Betrieb befindlichen Förderanlage eine Ergänzung oder Änderung zu erfolgen hat, für den wirtschaftlichen Betrieb zweckmäßig, wenn diese Ergänzung bzw. Änderung geplant werden kann, bevor den Betrieb störende oder verhindernde Eingriffe an der bestehenden Förderanlage erfolgen müssen. Die dann an der Förderanlage selbst erforderlichen Eingriffe sollten in möglichst kurzer und sicherer Weise durchführbar sein, um die Stillstandszeit möglichst kurz zu halten.

Eine zentrale Anforderung an Förderanlagen besteht somit heute darin, die Einrichtung, sei es im Zuge der Erstinstallation oder im Zuge von Ergänzungen oder Änderungen an einer bereits installierten Förderanlage, in solcher Weise durchführen zu können, dass diese in sicherer, zugleich komfortabler und insbesondere mit kurzer Stillstandszeit durchführbaren Weise erfolgt. Aufgabe der Erfindung ist es, eine Förderanlage bereitzustellen, die dies ermöglicht und insbesondere auch ein Verfahren bereitzustellen, mit dem Förderanlagen in der entsprechenden Weise eingerichtet werden können.

Diese Aufgabe wird erfindungsgemäß mit einem Verfahren der eingangs genannten Art gelöst, welches die Schritte aufweist:
- Virtuelles Aufbauen der Fördervorrichtung auf einem Einrichtungsrechner, indem jede Steuerungseinheit virtuell auf dem Einrichtungsrechner erstellt, die signaltechnische Verbindung der Steuerungseinheiten mittels der Busleitung virtuell auf dem Einrichtungsrechner definiert und auf einer graphischen Ausgabeeinheit des Einrichtungsrechners dargestellt wird,
- Bereitstellen eines Signaleingangs an jeder Steuerungseinheit, welcher manuell über einen Signalgeber auslösbar ist
- Verbinden des Einrichtungsrechners mit der Signalbusleitung,
- Zuweisen einer individuellen Busadresse zu jeder Steuerungseinheit, indem
   a. auf dem Einrichtungsrechner eine einzelne Steuerungseinheit einem Benutzer angegeben wird,
   b. an der auf dem Einrichtungsrechner angegebenen Steuerungseinheit der Signaleingang ausgelöst wird, und
   c. durch das Auslösen der Steuerungseinheit eine Busadresse zugewiesen wird,
wobei die Schritte a-c so oft wiederholt werden, bis jeder Steuerungseinheit eine individuelle Busadresse zugewiesen worden ist.

Ferner ist ein Verfahren bevorzugt, bei dem das Zuweisen einer individuellen Busadresse zu jeder Steuerungseinheit erfolgt, indem
a. auf dem Einrichtungsrechner eine einzelne Steuerungseinheit einem Benutzer angegeben wird,
b. an die virtuelle Steuerungseinheit durch den Einrichtungsrechner eine Busadresse vergeben wird,
c. an der auf dem Einrichtungsrechner angegebenen Steuerungseinheit der Signaleingang manuell ausgelöst wird, und
d. durch die Auslösung des Signaleingangs die vergebene Busadresse zugewiesen wird,
wobei die Schritte b-d so oft wiederholt werden, bis jeder Steuerungseinheit eine individuelle Busadresse zugewiesen worden ist.

Mit dem erfindungsgemäßen Verfahren wird ein einfacher, zugleich aber schnell durchführbarer Einrichtungsvorgang für eine Fördervorrichtung bereitgestellt. Dieses Verfahren ist einerseits vorteilhaft dafür nutzbar, eine Fördervorrichtung bei ihrem erstmaligen Aufbau und der Inbetriebnahme grundsätzlich einzurichten, andererseits ermöglicht das Verfahren auch in vorteilhafter Weise die Ergänzung und Änderung an bereits bestehenden Fördervorrichtungen.

Gemäß des erfindungsgemäßen Verfahrens wird die Fördervorrichtung zunächst virtuell auf einem Einrichtungsrechner aufgebaut. Dabei geht das erfindungsgemäße Verfahren grundsätzlich von einer Fördervorrichtung aus, die sich durch mehrere Module, beispielsweise Förderzonen oder Fördereinheiten, Ausschleusungsmodulen, Einschleusungsmodulen oder dgl. in einer bestimmten Anordnung zueinander zusammensetzt. Die Module werden dabei von jeweils einer Steuerungseinheit angesteuert. Grundsätzlich ist dabei zu verstehen, dass eine Steuerungseinheit für die Ansteuerung genau einer Förderzone zuständig sein kann, also beispielsweise Daten von einem dieser Steuerungszone zugeordneten Sensor empfängt und genau einen, dieser Förderzone zugeordneten Förderantrieb ansteuert. In anderen Ausgestaltungen kann die Steuerungseinheit aber auch Daten von mehreren Sensoren empfangen und auch mehrere Förderantriebe ansteuern, beispielsweise um zwei nacheinander angeordnete Förderzonen anzusteuern und entsprechend aus jeder Förderzone jeweils von einem Sensor Daten zu empfangen und in jeder Förderzone jeweils einen Förderantrieb anzusteuern. In anderen Ausgestaltungen ist eine Steuerungseinheit dafür ausgebildet, um neben einem Förderantrieb auch andere Aktuatoren anzusteuern, beispielsweise Ausschleuser oder Hebevorrichtungen, und um von mehreren und unterschiedlichen Sensoren Daten zu empfangen.

Die solcherart aufgebaute Fördervorrichtung wird virtuell aufgebaut. Unter einem virtuellen Aufbau ist hierbei zu verstehen, dass eine für einen Benutzer lesbare Codierung oder Darstellung erstellt wird, aus welcher die Konfiguration der Fördervorrichtung erkennbar ist. Dies kann beispielsweise erfolgen, indem virtuelle Module, welche die tatsächlich in der Förderanlage vorhandenen Module repräsentieren, graphisch aneinandergereiht werden und auf diese Weise die Förderanlage auch graphisch in einem verkleinerten Maßstab virtuell abgebildet wird.

Das erfindungsgemäße Verfahren geht weiterhin davon aus, dass die Datenübermittlung zwischen der Mehrzahl von Steuerungseinheiten mittels einer Busleitung erfolgt. Eine solche Art der Datenübermittlung ist grundsätzlich vorbekannt. Sie weist den Vorteil auf, dass mittels einer durchgehenden Signalleitung mehrere Steuerungseinheiten hintereinander in die Kommunikation eingebunden werden können und hierbei ein Datentransfer sowohl zu als auch von der jeweiligen Steuerungseinheit ermöglicht wird. Ein busbasierter Datentransfer beruht dabei grundsätzlich auf dem Prinzip, dass die über den Bus kommunizierten Daten von allen an den Datenbus angeschlossenen Steuerungseinheiten empfangen werden und die Steuerungseinheiten anhand einer individuellen, ihnen jeweils zugeordneten Adresse, die Bestandteil jedes über den Datenbus kommunizierten Datenblocks ist, erkennen können, ob der Datenblock für sie bestimmt ist oder nicht. Zu diesem Zweck ist es notwendig, dass jeder Steuerungseinheit eine individuelle Busadresse zugewiesen ist und die Zuweisung dieser individuellen Busadresse hat im Zuge der Einrichtung einer Fördervorrichtung zu erfolgen. Bekannt ist es, die Busadresse mittels manueller Programmierung zuzuweisen, beispielsweise indem eine an den Bus angeschlossene Steuerungseinheit anhand einer Hardware-Codierung vom Benutzer identifiziert wird und ihr so per manueller Eingabe eine Adresse zugewiesen wird. Dies bedeutet jedoch einen erheblichen programmtechnischen Aufwand und insbesondere auch einen erheblichen Dokumentations- und Verwaltungsaufwand und kann somit nicht für eine schnelle und komfortable Einrichtung genutzt werden. Eine automatische Selbstkonfiguration hingegen eröffnet in der Regel nicht die Möglichkeit, komplexe Förderanlagen einzurichten und hat keine ausreichenden Möglichkeiten, um eine in logischer Weise nachvollziehbare Einrichtung, d.h. insbesondere Adresszuweisung und Parametrierung, durchzuführen.

Erfindungsgemäß wird durch den Einrichtungsrechner an jede Steuerungseinheit eine Busadresse vergeben. Hierunter ist zu verstehen, dass der Einrichtungsrechner eine individuelle Busadresse bestimmt, beispielsweise nach einem numerisch aufsteigenden System, und diese Busadresse der Steuerungseinheit zuordnet. In einem späteren Schritt muss die so zugeordnete bzw. vergebene Busadresse noch an die Steuerungseinheit zugewiesen werden Zur Zuweisung ist es notwendig, dass Einrichtungsrechner und Steuerungseinheit signaltechnisch verbunden sind, im erfindungsgemäßen Falle über die Busleitung, um die hierfür erforderlichen Daten auszutauschen. Durch die Zuweisung wird in der Steuerungseinheit die ihr zugeordnete Busadresse abgespeichert, sodass die Steuerungseinheit an Sie adressierte Datenblöcke durch entsprechenden Vergleich erkennen kann, bzw. von ihr abgesendete Datenblöcke entsprechend mit einer Absenderadresse versehen kann.

Erfindungsgemäß wird an jeder Steuerungseinheit ein manuell auslösbarer, Signaleingang bereitgestellt. Dieser Signaleingang kann als Drucktaster, Schalter oder dgl. ausgeführt sein und ist innerhalb der Steuerungseinrichtung solcherart signaltechnisch angeschlossen, dass die Auslösung des Signaleingangs, d.h. entweder das Schließen oder Öffnen eines Kontakts, eine entsprechende Signaleingabe, eine irgendwie sonst geartete Schaltung des Signaleingangs oder dergleichen, von der Steuerungseinheit verarbeitbar ist und in Zusammenhang mit Daten gebracht werden kann, die über die Busleitung gesendet werden. Dies kann beispielsweise darin bestehen, dass das Auslösen des Signaleingangs mittels der Busleitung von der Steuerungseinheit an eine andere Steuerungseinheit oder an den Einrichtungsrechner signalisiert wird. In einer anderen beispielhaften Weise kann das Auslösen des Signaleingangs innerhalb der Steuerungseinheit so verarbeitet werden, dass über die Busleitung empfangene Adressdaten anlässlich des Auslösens des Signaleingangs zugeordnet und verarbeitet werden.

Grundsätzlich ist vorgesehen, dass ein Einrichtungsrechner mit der Busleitung verbunden wird. Diese signaltechnische Ankopplung des Einrichtungsrechners an die Busleitung kann in unmittelbarer Weise erfolgen, indem der Einrichtungsrechner direkt mit der Busleitung verbunden wird. Bevorzugt ist aber, dass der Einrichtungsrechner signaltechnisch mit einer Steuerungseinheit oder einer anderen Einheit signaltechnisch separat verbunden wird, die ihrerseits unmittelbar an die Busleitung angeschlossen ist. So kann beispielsweise der Einrichtungsrechner mittels einer genormten Schnittstelle und Datenübertragung, beispielsweise einer USB-Datenleitung, an eine Steuerungseinheit oder eine Steuerzentrale der Fördervorrichtung angeschlossen werden, die wiederum ihrerseits mittels des Datenbusses an die einzurichtenden Steuerungseinheiten angeschlossen ist.

Dieser Signaleingang kann als separate Schnittstelle an der Steuerungseinheit ausgebildet sein. In hierzu alternativen Ausführungsformen ist es auch möglich, den Signaleingang in eine Schnittstelle zu integrieren, die für einen anderen Funktionszweck an der Steuerungseinheit bereitgestellt ist. So kann beispielsweise ein Sensoranschluss für einen Sensor an der Steuerungseinheit in einer Doppelfunktion auch dazu genutzt werden, um im Zuge der Einrichtung und Adressierung der Fördervorrichtung eine Signalauslösung an der Steuerungseinheit zu bewirken, beispielsweise indem ein Gegenstand an einen an diesem Sensoranschluss angeschlossenen Sensor herangeführt wird.

Nachdem die Fördervorrichtung teilweise oder vollständig auf dem Einrichtungsrechner virtuell aufgebaut worden ist und der Einrichtungsrechner an die Steuerungseinheiten direkt oder indirekt signaltechnisch angeschlossen ist, kann die Einrichtung mit dem erfindungsgemäßen Verfahren weiter fortgeführt werden. Hierbei wird insbesondere jeder Steuerungseinheit eine individuelle Busadresse zugeordnet. Diese Zuordnung erfolgt, indem einem Benutzer des erfindungsgemäßen Verfahrens eine einzurichtende Steuerungseinheit mittels des Einrichtungsrechners angegeben bzw. angezeigt wird. Diese Anzeige kann beispielsweise in einer graphischen Hervorhebung, einer Benennung, Listung oder dgl. bestehen. Der Benutzer kann daraufhin den an dieser so angezeigten Steuerungseinheit vorhandenen Signaleingang mit einem Signalgeber schalten bzw. auslösen. Dies ermöglicht es, die solcherart einzurichtende Steuerungseinheit unzweideutig innerhalb des Steuerungssystems und über die Signalbusleitung zu identifizieren. Das Auslösen des Signaleingangs ermöglicht es dann, dass der solcherart identifizierten Steuerungseinheit eine individuelle Busadresse zugewiesen wird. Dabei ist die Busadresse insbesondere bereits durch den Einrichtungsrechner vorab bestimmt worden, beispielsweise beim virtuellen Aufbau der Fördervorrichtung. Die Zuweisung der individuellen Busadresse kann beispielsweise solcherart erfolgen, dass die Busadresse, nachdem die entsprechende Steuerungseinheit auf dem Einrichtungsrechner angezeigt wird, über die Busleitung kommuniziert wird und von der Steuerungseinheit nach Auslösen des Signaleingangs empfangen und zugeordnet, d.h. insbesondere abgespeichert wird. Alternativ hierzu kann das Auslösen des Signaleingangs aber auch die Versendung eines individuellen, der Steuerungseinheit zugeordneten Gerätecodes über die Signalbusleitung bewirken und dann innerhalb der Steuerungseinheit, des Einrichtungsrechners, einer Steuerungszentraleinrichtung und/oder anderen Steuerungseinheiten eine Zuordnung dieses individuellen Gerätecodes zu einer individuellen Busadresse erfolgen.

Grundsätzlich kann die Zuordnung der Busadressen innerhalb eines Pfads der Fördervorrichtung erfolgen, indem und nachdem dieser Pfad durch manuelle Bestimmung seines Start- und Endpunktes definiert wurde. Oftmals weisen Fördervorrichtung Verzweigungen auf, die dazu führen, dass durch Definition eines Start- und Endpunkts kein eindeutiger einziger Förderpfad bestimmt wird, sondern mehrere Förderpfade. In diesem Fall ist erfindungsgemäß bevorzugt vorgesehen, dass dem Benutzer die mehreren Förderpfade zur Auswahl angegeben werden und er durch Bestimmung eines Zwlschenziels auf einem dieser Förderpfade einen einzigen der Förderpfade zur Zuordnung der Busadressen auswählen kann.

Erfindungsgemäß wird damit eine komfortable und zugleich sichere und schnelle Möglichkeit bereitgestellt, durch Auslösen des Signaleingangs an einer Steuerungseinheit eine individuelle Busadresse dieser Steuerungseinheit zuzuordnen. Die Zuordnung dieser individuellen Busadressen kann dabei in aufeinander folgender Weise an mehreren Steuerungseinheiten durchgeführt werden, um hierdurch die gesamte Fördervorrichtung einzurichten.

Gemäß einer ersten bevorzugten Ausführungsform ist vorgesehen, dass einer ersten Steuerungseinheit eine Busadresse zugewiesen wird und hierauf folgend einer zweiten Steuerungseinheit eine Busadresse zugewiesen wird, welche in der Fördervorrichtung benachbart zu der ersten Steuerungseinheit angeordnet ist. Mit dieser Ausführungsform wird die Einrichtung in einer solchen Weise durchgeführt, dass das Auslösen des Signaleingangs an den Steuerungseinheiten in einer Abfolge durchgeführt werden kann, die das fehlerhafte Auslösen eines falschen Signaleingangs vermeidet bzw. vorbeugt und zugleich eine schnelle Einrichtung und Adresszuweisung ermöglicht. Der Einrichtungsrechner ist zu diesem Zweck vorzugsweise solcherart ausgebildet, dass er die tatsächliche Anordnung der Steuerungseinheiten zueinander erkennen kann, insbesondere anhand der virtuell aufgebauten Fördervorrichtung erkennen kann und die Angabe der Steuerungseinheiten zum Zwecke der Zuordnung einer Busadresse in einer Abfolge durchführt, welche diese solcherart erkannte tatsächliche Anordnung der Steuerungseinheiten zueinander berücksichtigt und entsprechend benachbarte Steuerungseinheiten in zeitlich unmittelbar aufeinander folgender Weise angibt. Dabei kann die zweite Steuerungseinheit erst angegeben werden, nachdem die erste Steuerungseinheit eine Adresszuweisung erfahren hat oder die erste und zweite Steuerungseinheit und gegebenenfalls weitere Steuerungseinheiten können gleichzeitig durch den Einrichtungsrechner angegeben werden und hierbei zusätzlich eine Reihenfolge angegeben werden, in welcher diesen mehreren Steuerungseinheiten die Busadresse zugewiesen werden soll und dementsprechend in dieser Reihenfolge die Signaleingänge nacheinander geschaltet werden sollen.

Noch weiter ist es bevorzugt, dass auf der graphischen Ausgabeeinheit mehrere Steuerungseinheiten einer Förderstrecke oder eines Förderstreckenanteils dargestellt werden und eine Reihenfolge signalisiert wird, in welcher diesen mehreren Steuerungseinheiten eine Busadresse zugewiesen werden soll. Diese Fortbildung ermöglicht es, eine dem logischen Verständnis von Fördervorrichtungen entsprechende Abarbeitung im Zuge der Einrichtung durchzuführen, indem durch den Einrichtungsrechner bestimmte Förderstrecken innerhalb der Fördervorrichtung erkannt werden oder durch einen Benutzer durch Start-, Ziel- und ggf. Zwischenpunkte definiert wird, insbesondere anhand des virtuellen Aufbaus der Fördervorrichtung auf dem Einrichtungsrechner und diese Förderstrecken oder Förderstreckenanteile dann einer entsprechenden Adresszuordnung unterzogen werden. Insbesondere kann hierdurch eine für den Benutzer logische Abarbeitungsreihenfolge der Signaleingänge vom Einrichtungsrechner erstellt und der Adresszuordnung zugrunde gelegt werden.

Noch weiter ist es bevorzugt, dass die Fördervorrichtung eine Verzweigung aufweist und dass in einer ersten Schrittfolge den Steuerungseinheiten einer ersten Förderstrecke der Fördervorrichtung Busadressen zugewiesen werden und in einer zweiten Schrittfolge den Steuerungseinheiten einer zweiten, von der Verzweigung ausgehenden Förderstrecke der Fördervorrichtung Busadressen zugewiesen werden. Für diese Verfahrensfortbildung ist der Einrichtungsrechner insbesondere solcherart ausgebildet, um eine Förderstrecke, welche eine solche Verzweigung beinhaltet sowie eine von der Verzweigung ausgehende zweite Förderstrecke zu erkennen, insbesondere anhand des virtuellen Aufbaus der Fördervorrichtung zu erkennen oder definiert zu erhalten. Erfindungsgemäß wird dann die Zuordnung der Busadressen in einer ersten Schrittfolge und einer zweiten Schrittfolge durchgeführt, wobei in der ersten Schrittfolge Steuerungseinheiten jeweils individuelle Busadressen zugeordnet werden, welche in einer ersten Förderstrecke bis zu der Verzweigung führen, von der Verzweigung ausgehend verlaufen oder die Verzweigung beinhalten und in einer zweiten Schrittfolge Steuerungseinheiten jeweils individuelle Busadressen zugewiesen werden, welche in einer zweiten Förderstrecke liegen, die sich ausgehend von der Verzweigung erstreckt. Dabei ist zu verstehen, dass diese zweite Förderstrecke beispielsweise im Falle einer Einschleusung eine Förderrichtung in Richtung auf die Verzweigung aufweisen kann oder im Falle einer Ausschleusung eine Förderrichtung von der Verzweigung weg haben kann. Mit dieser Fortbildung wird eine effiziente und im Hinblick auf Zuordnungsfehler sichere Zuordnung von Busadressen auch in komplex aufgebauten Fördervorrichtungen erzielt.

Noch weiter ist es bevorzugt, dass mittels einer Benutzerschnittstelle des Einrichtungsrechners zumindest ein Parameter zum Betrieb eines Förderantriebs und/oder eines Sensors eingegeben wird, dieser Parameter derjenigen Steuerungseinheit, welche den Förderantrieb bzw. Sensor ansteuert, zugewiesen und vorzugsweise über die Signalbusleitung an diese Steuerungseinheit übertragen wird. Mittels dieser Fortbildung kann mit dem erfindungsgemäßen Einrichtungsverfahren auch ein oder mehrere Parameter einer Steuerungseinheit zugewiesen werden und folglich neben der Busadressierung auch eine Parametrierung der Fördervorrichtung durchgeführt werden. Dabei können Parameter zugewiesen werden, die beispielsweise eine Anfahrrampe, eine Auslauframpe eine Fördergeschwindigkeit und/oder eine Nachlaufzeit eines Förderantriebs charakterisieren. Neben diesen, auf den Förderantrieb und dessen Betrieb abgestimmten Parametern können auch logische Parameter zugewiesen werden, beispielsweise indem einer Steuerungseinheit die ihr in Förderrichtung vorhergehende und nachlaufende Steuerungseinheit zugewiesen wird und eine entsprechende Kommunikation zwischen diesen benachbarten Steuerungseinheiten definiert wird. Weiterhin können Parameter der Steuerungseinheit zugewiesen werden, welche einen an die Steuerungseinheit angeschlossenen Sensor betreffen, um dessen Eingangsgröße, Spannungsversorgung oder dgl. zu definieren. Schließlich kann der Steuerungseinheit ein Parameter zugewiesen werden, welcher die Betriebsweise innerhalb einer von der Steuerungseinheit kontrollierten Förderzone definiert, also beispielsweise eine Förderlogik mit Einzelplatzabzug oder eine Förderlogik mit Blockabzug, womit eine logische Verarbeitung der Daten eines Sensors, die an die Steuerungseinheit angeschlossen ist, im Hinblick auf die Ansteuerung eines Förderantriebs, der an die Steuerungseinheit angeschlossen ist, definiert und als Parameter zugewiesen wird.

Noch weiter ist es bevorzugt, das der Signaleingang in Form eines Reed Kontaktes ausgelegt ist und mit einem Signalgeber bevorzugt in Form eines Magnets geschaltet wird, indem dieser an eine definierte Stelle an der Steuerungseinheit gehalten wird. Die Bereitstellung eines Reed-Kontaktes ermöglicht insbesondere, einerseits ein versehentliches Auslösen des Signaleingangs an der Steuerungseinheit zu vermeiden, andererseits wird ein Auslösen durch nicht autorisierte Personen zumindest maßgeblich erschwert, da zur Auslösung ein Magnet benötigt wird und dieser Magnet an eine bestimmte, gegebenenfalls nur Fachkräften bekannte Stelle der Steuerungseinheit gehalten werden muss, um den Reed-Kontakt auszulösen.

Gemäß einer weiteren bevorzugten Ausführungsform des erfindungsgemäßen Verfahrens ist vorgesehen, dass die Steuerungseinheit an eine Stromversorgung angeschlossen wird, der Signaleingang ausgelöst wird, und das Auslösen eine Funktionsprüfung auslöst, in welcher ein an die Steuerungseinheit angeschlossener Förderantrieb für eine Förderbewegung angesteuert wird. Mit dieser erfindungsgemäßen Fortbildung wird die Einrichtung einer Fördervorrichtung weiter vereinfacht, indem der an einer Steuerungseinheit bereitgestellte Signaleingang eine Funktionsprüfung ermöglicht. Grundsätzlich ist zu verstehen, dass es in der erfindungsgemäßen Fördervorrichtung bevorzugt ist, einen an eine Steuerungseinheit angeschlossenen Förderantrieb auch über die Steuerungseinheit mit der benötigten Antriebsenergie zu versorgen. Zu diesem Zweck weist die Steuerungseinheit eine entsprechende Anschlussschnittstelle für eine Stromversorgungsleitung auf. Diese Anschlussschnittstelle ist vorzugsweise verschieden von der Schnittstelle, an welcher die Signalbusleitung angeschlossen ist. Grundsätzlich ist aber zu verstehen, dass die erfindungsgemäße Fördervorrichtung auch solcherart aufgebaut sein kann, dass der Förderantrieb unter Umgehung der Steuerungseinheit mit Energie in direkter Weise aus einer Energiequelle versorgt wird und die Steuerungseinheit lediglich der signaltechnischen Ansteuerung des Förderantriebs dient.

Im Zuge der Einrichtung einer Fördervorrichtung ist es oftmals problematisch, dass Störungen und Fehlfunktionen von Förderantrieben hinsichtlich ihrer grundsätzlichen Funktion oder ihrer Ansteuerungsweise auftreten. Die Ermittlung der Fehlerursache nimmt häufig erhebliche Zeit und folglich Kosten in Anspruch. Um diese Problematik zu überwinden, wird erfindungsgemäß die Möglichkeit bereitgestellt, anhand des Signaleingangs an der Steuerungseinheit eine lokale Funktionsprüfung eines Förderantriebs durchzuführen, der an diese Steuerungseinheit angeschlossen ist. Dem Signaleingang wird somit eine Zusatzfunktion zugewiesen. Diese Zusatzfunktion setzt bei Stromversorgung des Förderantriebs über die Steuerungseinheit voraus, dass die Steuerungseinheit an eine Stromversorgung angeschlossen ist, um auf diese Weise den Förderantrieb mit Strom zu versorgen. Insbesondere kann die Zusatzfunktion des Signaleingangs nur in einem Modus vorgesehen sein, in dem keine Busleitung an die Steuerungseinheit angeschlossen ist oder aber bei angeschlossener Busleitung diese noch nicht in Betrieb ist, indem die Steuerungseinheit zur Erfassung dieses Modus ausgebildet ist. Die Fortbildung ermöglicht es, zu überprüfen, ob ein an die Steuerungseinheit angeschlossener Förderantrieb funktionsfähig ist und ob der Anschluss ordnungsgemäß erfolgt ist. Somit wird ein kompakter Aufbau der Steuerungseinheit sichergestellt und zugleich eine einfache und schnelle Einrichtung einer Fördervorrichtung ermöglicht.

Noch weiter ist es bevorzugt, dass die Steuerungseinheit an eine Stromversorgung angeschlossen wird, der Signaleingang ausgelöst wird, und das Auslösen eine Funktionsprüfung auslöst, in welcher die Funktionsfähigkeit eines an die Steuerungseinheit angeschlossenen Sensors durch eine Signalausgabe, insbesondere eine optische Signalausgabe an der Steuerungseinheit angezeigt wird. Diese Fortbildung ist in Alternative oder zusätzlich zu der zuvor beschriebenen Fortbildung vorgesehen und ermöglicht auch eine Überprüfung eines an die Steuerungseinheit angeschlossenen Sensors. Zu diesem Zweck ist der Sensor mittels des Signaleingangs der Steuerungseinheit aktivierbar, so dass eine Messung durch den Sensor bewirkt wird und die bewirkte Messung durch ein entsprechendes Signal einem Benutzer angezeigt wird. Darüber hinaus kann auch bei erfolgender Messung die erfolgte Detektion durch den Sensor, beispielsweise die Unterbrechung einer als Sensor dienenden Lichtschranke, mittels einer entsprechenden Signalausgabe einem Benutzer angezeigt werden, um nicht nur den korrekten Anschluss des Sensors überprüfen zu können, sondern auch dessen Funktionsfähigkeit. Dabei ist zu verstehen, dass dieser Funktionsüberprüfungsmodus insbesondere auch durch eine Anschlussweise eingestellt wird, in welcher eine Stromversorgung angeschlossen ist, die Signalbusleitung aber nicht angeschlossen oder nicht in Betrieb ist. Die Funktionsprüfung des Sensors kann dabei zeitgleich mit der Funktionsprüfung des Förderantriebs erfolgen.

Gemäß einer weiteren bevorzugten Ausgestaltung ist vorgesehen, dass durch die Auslösung des Reedkontakts an einer Steuerungseinheit diese Steuerungseinheit auf dem Bildschirm des Einrichtungsrechners visualisiert wird. Mit dieser Fortbildung ist eine schnelle Identifikation einer physikalisch vorhandenen Steuerungseinheit innerhalb der virtuell aufgebauten Fördervorrichtung im Einrichtungsrechner möglich.

Grundsätzlich ist zu verstehen, dass eine virtuell vorerstellte Architektur auf einem Einrichtungsrechner erstellt werden kann und nach signaltechnischer Verbindung dieses Einrichtungsrechners mit den Steuerungseinheiten die dabei vergebenen Busadressen und Parameter auch den Steuerungseinheiten zugewiesen werden können. Alternativ hierzu kann die erstellte virtuelle Busarchitektur sowie gegebenenfalls bereits vergebene Busadressen und eingegebene Parameter jedoch auch auf einem Speichermedium gespeichert werden und in einen anderen Rechner geladen werden oder unmittelbar an einen anderen Rechner übertragen werden. Hiernach kann die Zuweisung der Busadressen und der Parameter anhand dieses anderen Rechners, welcher gegebenenfalls auch ein Steuerungsrechner für die Fördervorrichtung sein kann, nach entsprechender signaltechnischer Verbindung des Rechners mit den Steuerungseinheiten an diese zugewiesen und übertragen werden.

Ein weiterer Aspekt der Erfindung ist ein Computerprogrammprodukt zur Ausführung auf einem Computer, welches ausgebildet ist, um ein Verfahren der zuvor beschriebenen Weise auszuführen, wenn es auf einem Computer ausgeführt wird. Dieser Erfindungsaspekt betrifft eine Implementierung des erfindungsgemäßen Verfahrens in eine Software, die auf einem Einrichtungsrechner ablaufen kann, um das erfindungsgemäße Verfahren durchzuführen.

Ein weiterer Aspekt der Erfindung betrifft eine Fördervorrichtung der eingangs beschriebenen Art, welche dadurch fortgebildet ist, dass eine, vorzugsweise jede Steuerungseinheit einen Signaleingang, insbesondere einen Reed-Kontakt, umfasst und der Signaleingang ausgebildet ist, um eine Zuweisung einer individuellen Busadresse zu bewirken, wenn der Signaleingang mit einem Signalgeber ausgelöst wird und die Steuerungseinheit mittels des Datenbusses mit einem Einrichtungsrechner signaltechnisch gekoppelt ist. Mit der so bereitgestellten Fördervorrichtung wird eine Steuerungseinheit bereitgestellt, die eine Zuweisung einer individuellen Busadresse in einer besonders effizienten und zugleich fehlersicheren Weise ermöglicht. Die Steuerungseinheit ist hierzu ausgebildet, um über eine Signaldatenbusleitung eine Adresszuweisung zu bewirken, die ausgelöst wird durch Auslösen des Signaleingangs, der an der Steuerungseinheit angeordnet ist. Die so fortgebildete Fördervorrichtung kann insbesondere mit dem zuvor beschriebenen, erfindungsgemäßen Verfahren eingerichtet werden.

Gemäß einer weiteren Fortbildung umfasst die Fördervorrichtung weiterhin einen Einrichtungsrechner, der ausgebildet ist, um die Steuerungseinheiten auf einer graphischen Ausgabeeinrichtung virtuell wiederzugeben und eine Steuerungseinheit, welcher eine Busadresse durch Auslösen des Signaleingangs zugewiesen werden soll, anzugeben, insbesondere in der Wiedergabe der graphischen Ausgabeeinrichtung zu kennzeichnen. Mit dieser Fortbildung wird eine funktionelle Interaktion zwischen einem Einrichtungsrechner und den Steuerungseinheiten einer Förderstrecke oder einer komplexen Förderanlage ermöglicht, welche für die Durchführung einer effizienten und sicheren Einrichtung der Fördervorrichtung ausgebildet ist. Der Einrichtungsrechner kann dabei insbesondere dafür ausgebildet sein, um über eine Benutzerschnittstelle zumindest einen Parameter zum Betrieb eines Förderantriebs zu empfangen und diesen Parameter derjenigen Steuerungseinheit, welche diesen Förderantrieb ansteuert, zuzuweisen. Vorzugsweise ist dabei vorgesehen, dass dieser Parameter über die Datenbusleitung an diese Steuerungseinheit übertragen wird. Als Steuerungsparameter sind dabei solche Parameter zu verstehen, die zuvor bereits in Zusammenhang mit dem erfindungsgemäßen Verfahren erläutert wurden.

Ferner ist bevorzugt, dass der Einrichtungsrechner ausgebildet ist, um über eine Benutzerschnittstelle zumindest einen Parameter zum Betrieb eines Förderantriebs zu empfangen und diesen Parameter derjenigen Steuerungseinheit, welche den Förderantrieb ansteuert, zuzuweisen und vorzugsweise über die Datenbusleitung an diese Steuerungseinheit zu übertragen.

Noch weiter ist es bevorzugt, dass der Einrichtungsrechner ausgebildet ist, um in einem ersten Adresszuweisungsprozess eine erste Steuerungseinheit anzugeben und dieser nach Auslösen des Signaleingangs eine Busadresse zuzuweisen und hierauf folgend eine zweite Steuerungseinheit, welche in der Fördervorrichtung benachbart zu der ersten Steuerungseinheit angeordnet ist, anzugeben und dieser nach Auslösen des Signaleingangs eine Busadresse zuzuweisen. Die so fortgebildete Fördervorrichtung ermöglicht es, dass eine Fehlzuweisung von Busadressen verhindert bzw. vorgebeugt wird, indem der Einrichtungsrechner eine Adresszuweisungsfolge berechnet, welcher der tatsächlichen (physikalischen) Anordnung der Steuerungseinheiten innerhalb der Fördervorrichtung Rechnung trägt. Durch die aufeinander folgende Zuweisung von Busadressen zu jeweils benachbarten Steuerungseinheiten kann die Adresszuweisung innerhalb der gesamten Fördervorrichtung insgesamt beschleunigt werden und zugleich Fehler in der Adresszuweisung vermieden werden. Der Einrichtungsrechner ist hierzu insbesondere dafür ausgebildet, um aufgrund einer Eingabe eines virtuellen Abbilds der Fördervorrichtung eine entsprechende Zuweisungsreihenfolge zu ermitteln. Alternativ kann der Einrichtungsrechner eine Benutzerschnittstelle bereitstellen, über welche eine solche Einrichtungsreihenfolge anhand eines virtuellen Abbilds der Fördervorrichtung definiert werden kann, beispielsweise durch Eingabe von Start- und Endpunkten, und dann folgend auf eine solche Definition eine entsprechende Angabe von Steuerungseinheiten zwecks Zuweisung einer Busadresse in der Reihenfolge ihrer Benachbarung zueinander durchzuführen.

Noch weiter ist es bevorzugt, wenn der Einrichtungsrechner ausgebildet ist, um auf der graphischen Ausgabeeinheit mehrere Steuerungseinheiten einer Förderstrecke oder eines Förderstreckenanteils darzustellen und eine Reihenfolge zu signalisieren, in welcher diesen mehreren Steuerungseinheiten jeweils eine individuelle Busadresse zugewiesen werden soll. Diese Fortbildung ermöglicht es, in schneller Folge, zugleich aber mit hoher Sicherheit und Vermeidung von Zuweisungsfehlern, eine gesamte Förderstrecke innerhalb einer Fördervorrichtung einer Adresszuweisung der darin enthaltenen Steuerungseinheiten zu unterziehen.

Noch weiter ist es bevorzugt, wenn der Einrichtungsrechner ausgebildet ist, um auf der graphischen Ausgabeeinheit eine Fördervorrichtung mit einer Verzweigung wiederzugeben und um in einer ersten Schrittfolge den Steuerungseinheiten einer ersten Förderstrecke der Fördervorrichtung jeweils individuelle Busadressen zuzuweisen und in einer zweiten Schrittfolge den Steuerungseinheiten einer zweiten, von der Verzweigung ausgehenden Förderstrecke der Fördervorrichtung jeweils individuelle Busadressen zuzuweisen. Diese Fortbildung betrifft insbesondere komplexe Fördervorrichtungen mit einer oder mehreren Verzweigungen, Einschleusungen oder Ausschleusungen und ermöglicht es durch entsprechende Fortbildung des Einrichtungsrechners, auch solche Fördervorrichtungen einer effizienten und Fehler vermeidenden Adresszuweisung zu unterziehen.

Schließlich ist es noch weiter bevorzugt, die erfindungsgemäße Fördervorrichtung fortzubilden, indem die Steuerungseinheit ausgebildet ist, um bei Auslösen des Signaleingangs in einer Anschlusssituation, in der die Steuerungseinheit mit einer Energieversorgungsleitung verbunden ist, eine Funktionsprüfung durchzuführen, in welcher die Funktionsfähigkeit eines an die Steuerungseinheit angeschlossenen Förderantriebs durch eine Förderbewegung des Förderantriebs angezeigt wird und/oder die Funktionsfähigkeit eines an die Steuerungseinheit angeschlossenen Sensors durch eine Ausgabe eines Signals mittels eines an der Steuerungseinheit bereitgestellten Signalmittels angezeigt wird. Mit dieser Fortbildung wird eine weitere Effizienzerhöhung und Erleichterung zur Fehlerreduktion bzw. zur Auffindung von Funktionsfehlern bei Fördervorrichtungen im Zuge von deren Einrichtung erzielt. Die Fördervorrichtung weist zu diesem Zweck Steuerungseinheiten auf, welche sowohl eine Überprüfung eines an die Steuerungseinheit angeschlossenen Förderantriebs als auch die Überprüfung eines an die Steuerungseinheit angeschlossenen Sensors ermöglicht. Die Überprüfung wird durch Auslösen des Signaleingangs bewirkt, wodurch der Signaleingang eine für die Einrichtung vorteilhafte Doppelfunktion erfüllt, nämlich einerseits bei angeschlossener und für die Signalübertragung in Betrieb genommener Signalbusleitung die Funktion der Adresszuweisung, andererseits bei lediglich angeschlossener Energieversorgungsleitung und nicht angeschlossener Signalbusleitung bzw. nicht betriebener Signalbusleitung die Funktion des Auslösens und Veranlassens einer Funktionsprüfung. Die Funktionsprüfung des Förderantriebs erfolgt durch einen zeitlich befristeten Betrieb des Förderantriebs. Die Funktionsprüfung des Sensors kann einerseits erfolgen, indem die richtige Anschlussweise des Sensors und dessen erfolgte Aktivierung durch entsprechende Signalmittel an der Steuerungseinheit angezeigt werden, andererseits kann darüber hinaus auch eine erfolgte Auslösung des Sensors bzw. erhaltene Sensorsignale des Sensors durch entsprechend andere Signalmittel angezeigt werden.

Eine bevorzugte Ausführungsform wird anhand der beiliegenden Figuren erläutert. Es zeigen:
- Fig. 1: eine schematische Ansicht einer erfindungsgemäßen Fördervorrichtung, welche an einen Einrichtungsrechner im Zuge der Einrichtung angeschlossen ist.
- Fig. 2a-e: einen beispielhaften Ablauf einer Konfiguration, Adressierung und Parametrierung einer erfindungsgemäßen Fördervorrichtung.

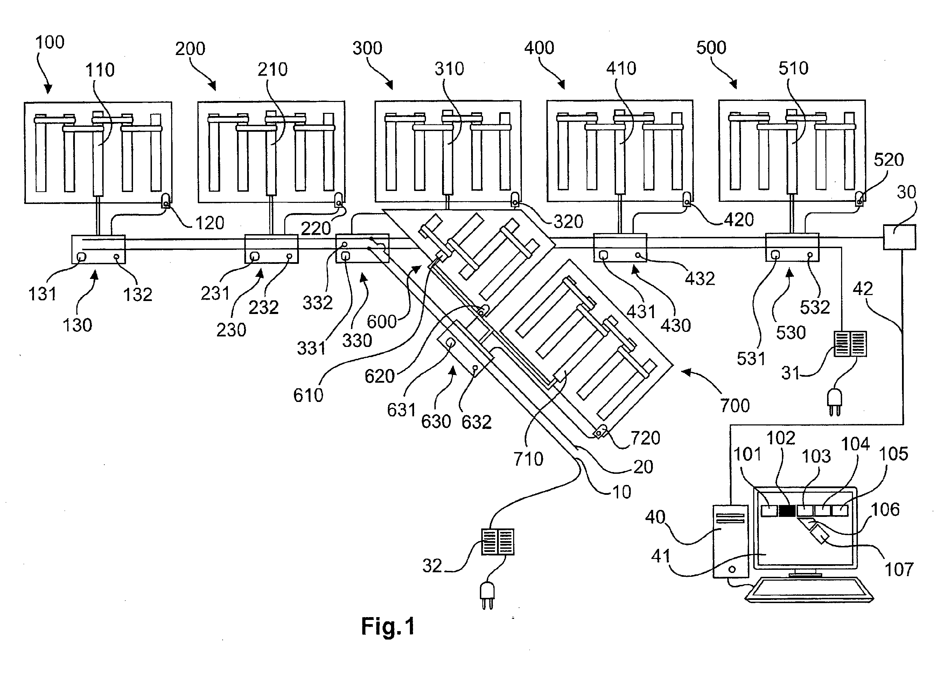

In Fig. 1 ist eine Fördervorrichtung abgebildet, welche sich aus insgesamt sieben Förderzonen 100 - 700 zusammensetzt. Die Förderzonen 100 - 500 sind als eine gerade Förderstrecke angeordnet, wobei die Förderzone 300 eine Verzweigung darstellt, an der die Förderzonen 600, 700 anschließen.

In jeder Förderzone 100 - 700 ist jeweils eine motorbetriebene Förderrolle 110 - 710 angeordnet, welche über Riemenantriebe beidseits der motorbetriebenen Förderrolle angeordnete Leerlaufrollen antreibt. Auf diese Weise kann ein Fördergut über die Förderzonen hinweg gefördert werden, indem es auf den Leerlaufrollen und den motorbetriebenen Förderrollen aufliegt.

Des Weiteren ist jeder Förderzone 100 - 700 eine Lichtschranke 120 - 720 zugeordnet. Diese Lichtschranke 120 - 720 ist so angeordnet, dass sie das Vorhandensein eines Förderguts im Austrittsbereich aus der jeweiligen Förderzone detektieren kann.

Die Lichtschranke 120 - 520 und die motorbetriebene Förderrolle 110 - 510 jeder Förderzone sind jeweils an genau eine Steuerungseinheit 130 - 530 angeschlossen, welche der jeweiligen Förderzone zugeordnet ist. Die Lichtschranke 620 und 720 und die motorbetriebene Förderrolle 610 und 710 der Förderzonen 600 und 700 sind an genau eine gemeinsame Steuerungseinheit 630 angeschlossen, welche diesen beiden Förderzonen zugeordnet ist. Die Steuerungseinheiten 130 - 630 sind untereinander mittels einer ersten Leitung 10 verbunden, die als Stromversorgungsleitung dient und jede Steuerungseinheit mit einer 24-Volt-Spannung versorgt. Sowohl der Sensor 120 - 720 als auch die motorbetriebene Förderrolle 110 - 710 wird aus der Steuerungseinheit 130 - 630 mit der aus dieser Versorgungsleitung 10 stammenden Spannung versorgt, wobei gegebenenfalls innerhalb der Steuerungseinheit eine Transformation dieser Spannung auf eine von der Förderrolle oder dem Sensor benötigte Spannung erfolgen könnte.

Mittels einer Signalbusleitung 20 sind die Steuerungseinheiten 130 - 630 weiterhin verbunden, um eine Datenübermittlung zwischen den Steuerungseinheiten zu ermöglichen.

Wie ersichtlich ist, dient die Steuerungseinheit 330 dazu, um die Signalbusleitung 20 zu verzweigen und auf diese Weise auch die Steuerungseinheit 630 der abzweigenden Förderstrecke, die aus den Förderzonen 600, 700 besteht, in die Signalübertragung innerhalb der Fördervorrichtung einzubinden.

Ein Netzteil 31 ist bereitgestellt und mit der Stromversorgungsleitung 10 entlang der Förderzonen 100-500 verbunden, um die Steuerungseinheiten 130-530 und die daran angeschlossenen Förderrollen und Sensoren mit Strom zu versorgen. Ein weiteres Netzteil 32 ist für die Ausschleusstrecke aus den Förderzonen 600, 700 bereitgestellt und versorgt die Steuerungseinheit 630 mit Strom.

Die Stromversorgungsleitung 10 ist an zwei Enden an zwei Spannungsquellen 31, 32 angeschlossen, um eine ausreichende Stromversorgung der Förderrollen 110-710 sicherzustellen. Die Signalbusleitung 20 ist weiterhin an einem Ende oder Anfang der Fördervorrichtung an eine Universalsteuerungseinheit 30 angeschlossen. Diese Universalsteuerungseinheit 30 kann als multifunktionale Steuerungseinheit ausgebildet sein und einerseits dazu dienen, um die Fördervorrichtung an eine externe Ablaufsteuerungseinheit, beispielsweise eine SPS oder dgl. anzuschließen oder aber lediglich als Abschluss dienen, wenn die für die Fördervorrichtung erforderliche Steuerungsablauflogik in den Steuerungseinheiten 130 - 630 selbst einprogrammiert und gespeichert ist.

Es ist zu verstehen, dass abweichend von der beispielhaften Darstellung in Figur 1 die Spannungsquelle 31, 32 auch in die Universalsteuerungseinheit 30 integriert sein kann, um so Stromversorgungsleitung 10 und Signalbusleitung 20 an einem einzigen Bauteil anschließen zu können.

In der abgebildeten Fördervorrichtung ist an die Universalsteuerungseinheit 30 ein Einrichtungsrechner 40 angeschlossen. Wie ersichtlich, ist auf einem Monitor 41 des Einrichtungsrechners 40 die Fördervorrichtung symbolisch anhand von Modulsymbolen 101-107 abgebildet. Dabei ist das Modul 102 auf dem Einrichtungsrechner 40 dem Benutzer angegeben, indem es durch eine Farbunterlegung markiert ist.

Jede der Steuerungseinheiten 130 - 630 verfügt über einen Reed-Kontakt 131 - 631. Dieser Reed-Kontakt ist signaltechnisch über eine Steuerungslogik innerhalb der Steuerungseinheiten 130 - 630 mit der Signalbusleitung 20 gekoppelt.

Jeder Reed-Kontakt kann unabhängig voneinander mittels eines Magneten (nicht dargestellt) ausgelöst werden.

Die in Fig. 1 dargestellte Momentaufnahme eines Einrichtungsvorgangs stellt einen Zustand dar, in dem ein Benutzer aufgefordert ist, den Reed-Kontakt 231 der Steuerungseinheit 230 auszulösen, um hierdurch eine Adresszuweisung an diese Steuerungseinheit zu bewirken.

Der Ablauf eines erfindungsgemäßen Einrichtungsverfahrens wird nachfolgend anhand der beispielhaft abgebildeten Fördervorrichtung erläutert.

Zunächst wird auf dem Einrichtungsrechner vorab durch entsprechende Auswahl und Anordnung entsprechender Modulsymbole die Fördervorrichtung konzipiert und in ihrer Anordnung erstellt und entsprechend auch graphisch dargestellt. Dabei werden einerseits die Förderzonen geplant, andererseits die Steuerungseinheiten geplant und einer oder mehreren Förderzonen, Aktuatoren, Sensoren oder dergleichen zugeordnet.

Nachdem dies erfolgt ist, kann innerhalb des Einrichtungsrechners eine Adressplanung erfolgen, bei welcher für jede in der Fördervorrichtung vorzusehende Steuerungseinheit eine individuelle Busadresse eingeplant wird. Des Weiteren können bereits bei diesem Planungsvorgang auf dem Einrichtungsrechner jeder Steuerungseinheit die erforderlichen Parameter zugeordnet werden, welche für den späteren Förderbetrieb notwendig sind. So können der Steuerungseinheit beispielsweise Anlauf- und Auslauframpen für die motorbetriebene Förderrolle, eine Fördergeschwindigkeit dieser motorbetriebenen Förderrolle, Parameter für den Betrieb des Lichtschrankensensors und ein Fördermodus, wie beispielsweise Einzelplatzabzug oder Blockabzug, und/oder weitere erforderliche Parameter zugeordnet werden.

Unabhängig von diesem Planungsvorgang auf dem Einrichtungsrechner, d.h. vor, während oder nach diesem Planungsvorgang kann die Fördervorrichtung physikalisch aufgebaut werden. Hierzu werden die entsprechenden Förderzonen montiert, in der beabsichtigten Weise nebeneinander angeordnet, die Steuerungseinheiten 130 - 630 der jeweiligen Förderzonen an einem Rahmengestell der jeweiligen Förderzonen montiert und mit dem jeweiligen Lichtschrankensensor und der motorbetriebenen Förderrolle der Förderzone verkabelt.

Hierauf folgend wird zunächst die Stromversorgungsleitung 10 an alle Steuerungseinheiten angeschlossen. Sobald dies erfolgt ist, kann die Funktionsfähigkeit jedes Lichtschrankensensors und jeder motorbetriebenen Förderrolle überprüft werden. Zu diesem Zweck wird ein Magnet an den jeweiligen Reed-Kontakt 131 - 631 der jeweiligen Steuerungseinheit gehalten. Daraufhin dreht sich bei bestehender Funktionsfähigkeit die motorbetriebene Förderrolle für einen vorbestimmten Zeitraum und signalisiert hierdurch die Funktionsfähigkeit. Des Weiteren wird durch eine erste Leuchtdiode 132 - 732 an der Steuerungseinheit der korrekte Anschluss des Lichtschrankensensors 120 - 720 angezeigt und die Funktionsfähigkeit dieses Lichtschrankensensors kann, indem der Sensor ausgelöst wird, überprüft werden, indem durch diese Auslösung die Leuchtdiode 132-732 erlischt.

Diese Funktionsüberprüfung kann durchgeführt werden, ohne dass die Signalbusleitung 20 angeschlossen ist, alternativ aber auch in einem Zustand, in dem diese Signalbusleitung angeschlossen ist, jedoch noch keine Adressierung erfolgt ist oder die Busleitung nicht in Betrieb genommen worden ist, d.h. signalfrei ist. Die Steuerungseinheiten sind solcherart ausgebildet, dass sie in einem solchen Anschlusszustand die Funktionsprüfung anstelle der Adressanweisung durchführen, wenn der Reed-Kontakt 131 - 631 ausgelöst wird.

Nachdem auf diese Weise die Funktionsfähigkeit und der richtige Anschluss von Förderrolle und Sensor überprüft worden ist, kann die Einrichtung der Fördervorrichtung fortgesetzt werden. Hierzu wird, falls noch nicht geschehen, die Signalbusleitung 20 verlegt und mit jeder Steuerungseinheit verbunden. Der Einrichtungsrechner 40 wird mittels einer Datenleitung 42 mit der Universalsteuerungseinheit 30 verbunden. Dabei ist zu verstehen, dass anstelle der Universalsteuerungseinheit 30 auch eine alternative Universalsteuerungseinheit angeschlossen sein kann, die über eine Schnittstelle für einen Feldbus verfügt. Über die Feldbusschnittstelle kann, beispielsweise eine SPS-Steuerungseinheit an das System angebunden werden.

Die Fortsetzung der Einrichtung erfolgt zunächst in Form einer Zuweisung individueller Busadressen zu jeder Steuerungseinheit 130 - 630. Zu diesem Zweck wird eine Förderstrecke oder eine Förderteilstrecke mittels des Einrichtungsrechners 40 definiert. Diese Definition kann erfolgen, indem ein Benutzer eine solche Förder(teil)strecke manuell durch Bestimmung eines Anfangs- und eines Endpunktes definiert oder indem der Einrichtungsrechner selbst auf Grundlage einer Auswertung der virtuell aufgebauten Fördervorrichtung eine solche Förderstrecke identifiziert.

Nachfolgend wird jede einzelne Steuerungseinheit, die in dieser so definierten Förder(teil)strecke vorhanden ist, auf dem Einrichtungsrechner einzeln angegeben, indem diese graphisch markiert wird, beispielweise durch farbliche Hervorhebung. Dabei kann insbesondere eine zeitlich aufeinander folgende Angabe dieser Steuerungseinheiten ausgehend vom Anfang bis zum Ende der Förder(teil)strecke erfolgen.

Wird eine entsprechende Steuerungseinheit bzw. Förderzone auf dem Bildschirm 41 des Einrichtungsrechners 40 angegeben, so wird durch einen Benutzer der Reed-Kontakt an der angegebenen Steuerungseinheit an der Fördervorrichtung ausgelöst und hierdurch eine Adresszuweisung an diese Steuerungseinheit bewirkt. Dies kann beispielsweise erfolgen, indem der Einrichtungsrechner laufend die der einzurichtenden Steuerungseinheit zugeordnete Busadresse über die Busleitung sendet und die Steuerungseinheit diese Busadresse bei Auslösung ihres Reed-Kontakts abspeichert. Eine andere Lösung besteht darin, dass der Einrichtungsrechner zu diesem Zweck einer innerhalb der Steuerungseinheit abgelegten Gerätenummer, welche ihm durch Auslösung des Reed-Kontaktes über die Signalbusleitung 20 und die Datenleitung 42 zugesendet wird, einer für diese Steuerungseinheit vorab geplante individuelle Busadresse zuordnet und diese Busadresse an die Steuerungseinheit sendet. Hierauf folgend erlischt die Angabe der so adresszugewiesenen Steuerungseinheit bzw. Förderzone auf den Monitor und die Steuerungseinheit, welcher nachfolgend eine Adresse zugewiesen werden soll, wird auf dem Monitor 41 angegeben, um hier in gleicher Weise mittels Auslösung des dortigen Reed-Kontaktes eine Adresszuweisung zu bewirken.

Die Wegstrecke der nacheinander zuzuweisenden Steuerungseinheiten bzw. Förderzonen wird auf dem Einrichtungsrechner graphisch dargestellt. Ebenso werden die Steuerungseinheiten, denen bereits eine Adresse zugewiesen wurde, in einer entsprechend andersartigen Hervorhebung kenntlich gemacht.

Nachdem im vorliegenden Fall die Steuerungseinheiten 130 - 530 der durch die Förderzonen 100 - 500 gebildeten Förderzonen auf solche Art jeweils eine individuelle Adresse zugewiesen bekommen haben, wird nachfolgend noch den Steuerungseinheiten 630 der Förderteilstrecke, die durch die Förderzonen 600, 700 gebildet wird, ebenfalls eine individuelle Busadresse zugewiesen. Der Adresszuweisungsvorgang ist damit abgeschlossen. Grundsätzlich ist zu verstehen, dass die Reihenfolge der Adresszuweisung vom Benutzer frei gewählt werden kann, indem er Anfangs- und Endpunkte von Förderpfaden angibt und gegebenenfalls zur eindeutigen Zuordnung weiterhin ein Zwischenziel angibt. Hierdurch können die dabei zurückzulegenden Wege minimiert und folglich die Zuweisung in kurzer Zeit ausgeführt werden.

Hierauf folgend werden die bereits vorab im Einrichtungsrechner für die jeweiligen Steuerungseinheiten geplanten Parameter an die Steuerungseinheiten übertragen und diesen auf diese Weise zugewiesen. Diese Parameter werden lokal in den Steuerungseinheiten gespeichert, um beim nachfolgenden Betrieb der Fördervorrichtung Grundlage der ablaufenden Fördervorgänge zu sein. Dabei ist zu verstehen, dass die Übertragung dieser Parameter auch jeweils unmittelbar nach der Zuweisung einer individuellen Busadresse zu einer Steuerungseinheit erfolgen kann. Weiterhin ist zu verstehen, dass auch im Zuge der Adresszuweisung und der Einrichtung der Fördervorrichtung mit angeschlossenem Einrichtungsrechner 40 diese Parameter verändert oder überhaupt erst geplant werden können. Das erfindungsgemäße Verfahren ist nicht darauf beschränkt, die Adressplanung und Parameterplanung vorab durchzuführen, sondern dies ist lediglich vorteilhaft zur Verkürzung der Einrichtungsdauer an der Fördervorrichtung selbst möglich.

Nachdem auf diese Weise die Parameter den jeweiligen Steuerungseinheiten zugewiesen und an diese übertragen worden sind, kann der Einrichtungsrechner 40 von der Fördervorrichtung abgekoppelt werden. Der Einrichtungsvorgang ist abgeschlossen und die Fördervorrichtung kann hierauf folgend ohne weiteren Dateneingang von dem Einrichtungsrechner betrieben werden.

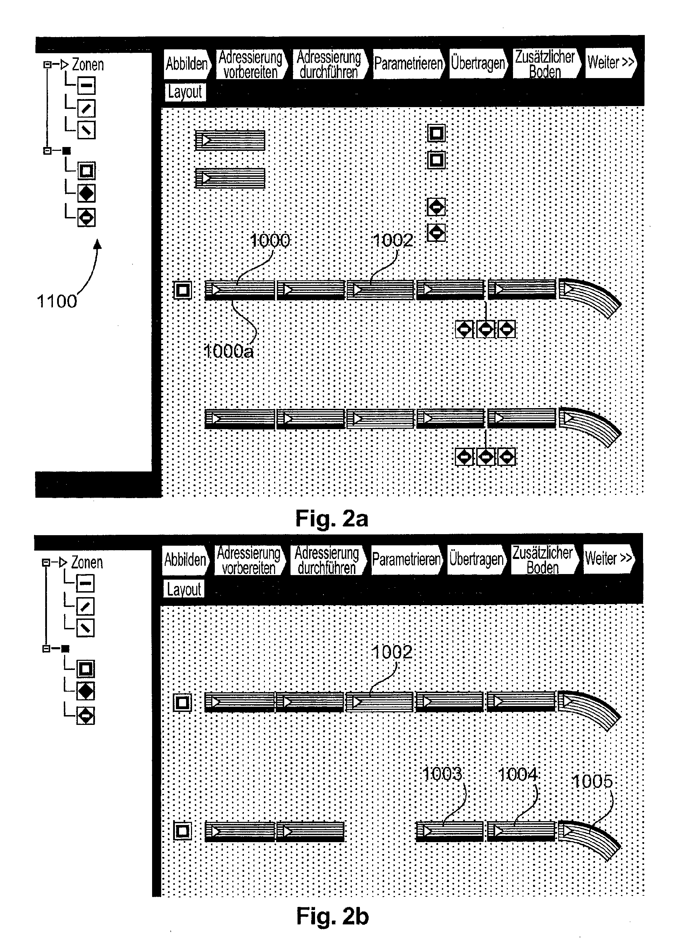

In den Figuren 2a-e ist beispielhaft der Vorgang einer Einrichtung einer Fördervorrichtung gemäß der Erfindung anhand von aufeinander zeitlich folgenden Screenshots dargestellt.

Figur 2a zeigt zunächst eine Konfigurationsphase, in der ein physikalisch aufgebautes Fördersystem oder ein noch aufzubauendes Fördersystem virtuell im Rechner abgebildet wird. Zu diesem Zweck kann der Benutzer aus einem Menü 1100 unter einer Vielzahl von unterschiedlichen Förderzonen und Steuereinheiten auswählen und diese auf dem Bildschirm in einer dem physikalischen Vorbild nachempfundenen Weise geometrisch zueinander anordnen. Bei diesem Einrichtungsvorgang wird die Zuordnung der Förderzonen zugleich in soweit logisch verknüpft, als das vom Programm bereits aufgrund der Anordnung der Zonen zueinander erkannt wird, welche Förderwege innerhalb der Fördervorrichtung realisiert sind und welche Förderzonen folglich einander Produkte übergeben.

Die Zonen werden zugleich in diesem Abbildungsvorgang einer jeweiligen Steuerungseinheit zugeordnet, was durch ein durchgehenden Strich 1000a in einer kontrastierenden Farbgebung im unteren Abschnitt eines Zonensymbols 1000 signalisiert wird. Dabei wird auch eine insoweit logische Analyse dieser Steuerungseinheit - Zuordnung und der Konnektierung vorgenommen, indem Förderzonen 1002, die keiner solchen Steuerungseinheit zugeordnet sind, blinken, und Förderzonen 1003 - 1005, die nicht an die Wegstrecke angeschlossen sind, ebenfalls blinkend dargestellt werden.

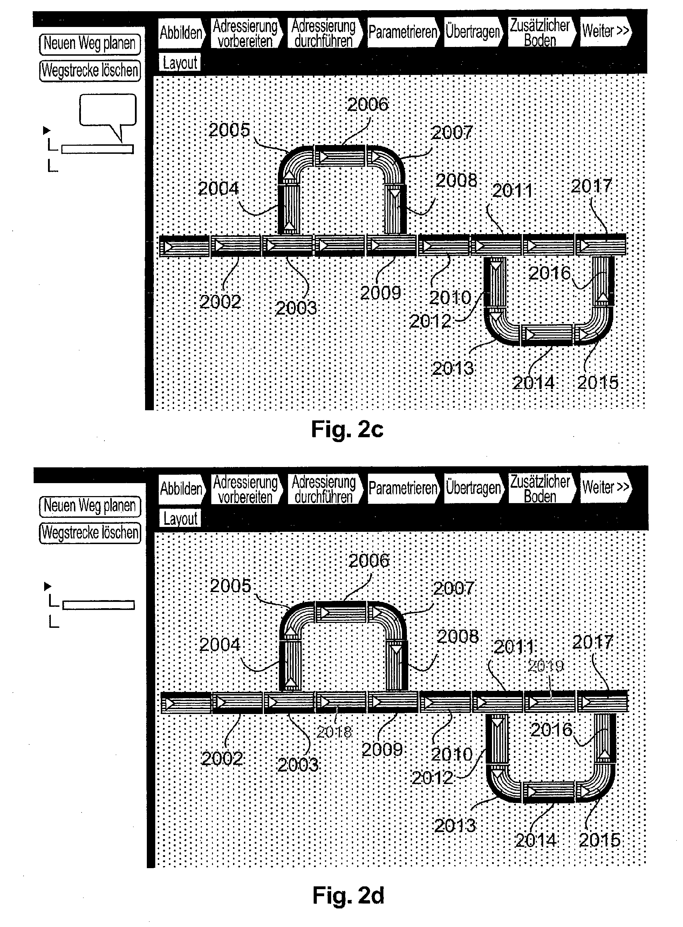

Nachdem diese Abbildung der Fördervorrichtung erfolgt ist, kann die Adressierung vorbereitet werden, wie in Figur 2c und d anhand einer anderen abgebildeten Fördervorrichtung nachfolgend erläutert wird. Während die Adressierung bei einer Fördervorrichtung gemäß Figuren 2a, b in eindeutiger Weise sofort erfolgen kann, indem eine Startzone 1000 und eine Endzone 1005 definiert wird da hier beispielsweise eine durchgehend aufsteigende Vergabe von Adressnummern in Förderrichtung in eindeutiger Weise erfolgen kann, ist bei vielen Fördervorrichtungen aufgrund von Verzweigungen und Einmündungen eine solch eindeutige, mit aufsteigenden Adressnummern durchzuführende Adressierung nicht möglich.

So ergibt sich zwar in Figur 2c die Möglichkeit, eine Anfangsförderzone 2002 und eine Endförderzone 2017 zu markieren, allerdings ergeben sich nun aufgrund der Doppelverzweigung und Einmündung zwischen diesen beiden Förderzonen mehrere Förderstrecken zwischen diesen beiden Förderzonen 2002 und 2017.

Der Benutzer wird daher aufgefordert, zum Zwecke der Adressierungsvorbereitung hier eine eindeutige Förderstrecke durch Anwahl von Zwischenzielen zu definieren, was, wie in Figur 2d gezeigt, durch Markierung der Förderzonen 2006 und 2014 in den beiden seitlichen Förderstrecken erfolgt. Nach dieser zusätzlichen Markierung ist die Adressierung für eine eindeutige Förderstrecke insoweit vorbereitet und die Förderzonen 2002-2017 könnten in einer eindeutigen, numerisch aufsteigenden Adressnummerzuweisung adressiert werden. Dies ermöglicht eine insoweit logische Adresszuweisung innerhalb des Bussystems für die so definierte Förderstrecke.

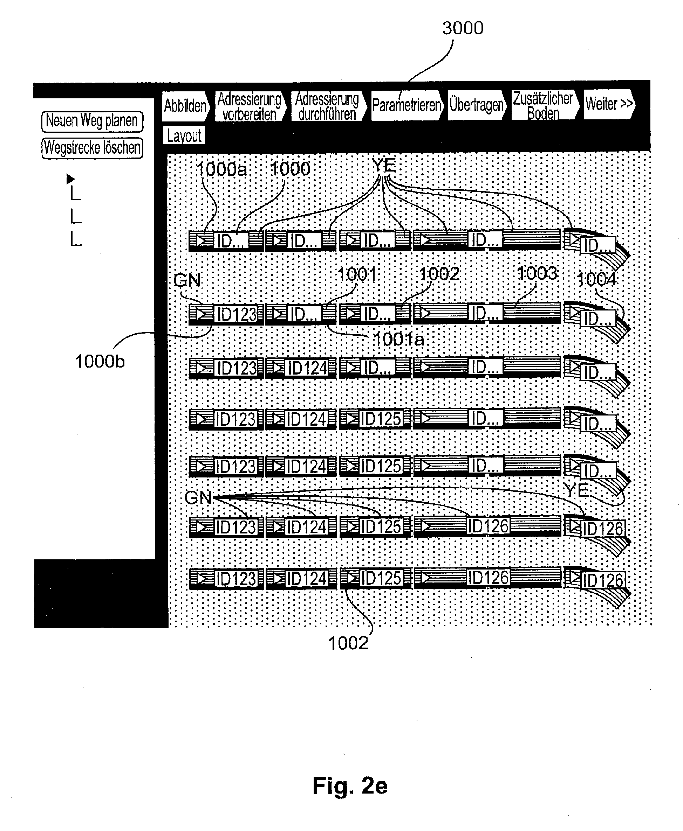

In einem nachfolgenden, hier nicht näher erläuterten Schritt sind dann noch die Förderzonen 2018, 2019 für eine Adressierung durch entsprechende Markierung anzuwählen und ebenfalls hierzu die Adressierung durchzuführen. Der Adressierungsvorgang ist in Figur 2e dargestellt anhand von sieben aufeinanderfolgenden Momentaufnahmen, die im tatsächlichen Ablauf zeitlich aufeinanderfolgend auf dem Konfigurationsbildschirm erscheinen würden.

Dem Benutzer wird jeweils durch eine gelbe Farbmarkierung YE signalisiert, dass für eine Förderzone noch keine Adressierung durchgeführt wurde. Zudem wird durch Blinken des Steuerungsbalkens 1000a in einem Zonensymbol angezeigt, dass diese Zone 1000 gerade eine Adresse zugewiesen bekommen soll. Der Benutzer kann anhand dieser Bildschirmanzeige manuell einen Reedkontakt an der physikalischen Steuerungseinheit in der Fördervorrichtung auslösen, wodurch eine vorbestimmte Adresse "ID123" an diese Förderzone vergeben wird. Die Adresse wird über die Busleitung an die Steuerungseinheit übermittelt und entsprechend in einer Zentralsteuerungseinheit gegebenenfalls zusätzlich vermerkt.

Nach erfolgter Adresszuweisung hört der Steuerungsbalken 1000a dieser Förderzone 1000 auf zu blinken und das Förderzonensymbol wechselt von der Farbe gelb YE auf die Farbe grün GN. Dies signalisiert dem Benutzer, dass für diese Förderzone erfolgreich eine Adressierung durchgeführt wurde. Die Adresse 1000b selbst wird in der Förderzone dargestellt.

Die in der zuvor bestimmten Förderstreckenreihenfolge nachfolgende Zone 1001 wird nun durch Blinken des Steuerungsbalkens 1001a als die nächste Förderzone signalisiert, für die eine Adressierung durchzuführen ist und erneut muss der Benutzer diese Adressierung durch Auslösen des Reedkontakts an der entsprechenden Steuerungseinheit in der Fördervorrichtung veranlassen.

Sobald der Benutzer auf diese Weise die Reedkontakte aller Steuerungseinheiten 1000-1004 in der Förderstrecke ausgelöst hat und hierdurch in der richtigen Reihenfolge eine Adressierung durchgeführt worden ist, kann der Adressierungsvorgang abgeschlossen werden.

Zu einem späteren Zeitpunkt kann, wenn beispielsweise der Austausch einer Steuerungseinheit 1002 aufgrund eines Defekts erforderlich ist, eine solche Adresszuweisung noch nachbearbeitet werden. Hierzu wird das Symbol der entsprechenden Förderzone in der Konfigurationssoftware angewählt und für eine erneute Adressierung nach Einbau der neuen Steuerungseinheit entweder wiederum durch Auslösen eines Reedkontakts die Adressierung durchgeführt oder manuell eine in die Steuerungseinheit eingespeicherte Seriennummer eingegeben, anhand welcher sich die Steuerungseinheit über die Busleitung eindeutig identifizieren kann, um einer Adresszuweisung zu ermöglichen.

In einem hierauf nachfolgenden Schritt können den so adresszugewiesenen Förderzonen dann bestimmte Parameter in einem Parametrierungsschritt 3000 zugewiesen werden. Bei diesem Parametrierungsschritt werden die entsprechenden Förderzonen entsprechend angewählt, wonach sich ein Parametrierungsfenster öffnet, in dem die jeweils individuellen Parameter der Steuerungseinheit dieser Förderzone eingestellt werden. Die so für mehrere Förderzonen einer Förderstrecke eingestellten Parameter können dann in einem nachfolgenden Schritt in die Fördervorrichtung übertragen werden, um die Steuerungseinheiten in der entsprechenden Weise zu programmieren.

## Patentansprüche

1. Verfahren zum Einrichten einer Fördervorrichtung, umfassend eine Mehrzahl von Förderzonen (100 - 700), von denen jede zumindest einen Förderantrieb (110-710) und eine Steuerungseinheit (130 - 530) zum Ansteuern dieses Förderantriebs (110 - 710) aufweist, mit dem Schritt:
- Verbinden der Steuerungseinheiten (130 - 530) untereinander mittels einer Signalbusleitung (20),
**gekennzeichnet durch** die Schritte:
- Virtuelles Aufbauen der Fördervorrichtung auf einem Einrichtungsrechner (40), indem jede Steuerungseinheit (130 - 530) virtuell auf dem Einrichtungsrechner (40) erstellt, die signaltechnische Verbindung der Steuerungseinheiten (130 - 530) mittels der Busleitung virtuell auf dem Einrichtungsrechner (40) definiert und auf einer graphischen Ausgabeeinheit des Einrichtungsrechners (40) dargestellt wird,
- Bereitstellen eines manuell auslösbaren Signaleingangs an jeder Steuerungseinheit (130 - 530),
- Verbinden des Einrichtungsrechners (40) mit der Signalbusleitung (20),
- Zuordnen einer individuellen Busadresse zu jeder Steuerungseinheit (130-530), indem
a. auf dem Einrichtungsrechner (40) eine einzelne Steuerungseinheit (130 - 530) einem Benutzer angegeben wird,
b. an der auf dem Einrichtungsrechner (40) angegebenen Steuerungseinheit (130 - 530) der Signaleingang ausgelöst wird, und
c. **durch** das Auslösen der Steuerungseinheit (130 - 530) eine Busadresse zugewiesen wird,
wobei die Schritte a-c so oft wiederholt werden, bis jeder Steuerungseinheit (130 - 530) eine individuelle Busadresse zugewiesen worden ist.

2. Verfahren nach Anspruch 1,
**dadurch gekennzeichnet, dass** einer ersten Steuerungseinheit (130 - 530) eine Busadresse zugewiesen wird und hierauf folgend einer zweiten Steuerungseinheit (130 - 530) eine Busadresse zugewiesen wird, welche in der Fördervorrichtung benachbart zu der ersten Steuerungseinheit (130 - 530) angeordnet ist.

3. Verfahren nach Anspruch 1 oder 2,
**dadurch gekennzeichnet, dass** auf der graphischen Ausgabeeinheit mehrere Steuerungseinheiten (130 - 530) einer Förderstrecke oder eines Förderstreckenanteils dargestellt werden und eine Reihenfolge signalisiert wird, in welcher diesen mehreren Steuerungseinheiten (130 - 530) eine Busadresse zugewiesen werden soll.

4. Verfahren nach einem der vorhergehenden Ansprüche,
**dadurch gekennzeichnet, dass** die Fördervorrichtung eine Verzweigung aufweist und dass in einer ersten Schrittfolge den Steuerungseinheiten (130 - 530) einer ersten Förderstrecke der Fördervorrichtung Busadressen zugewiesen werden und in einer zweiten Schrittfolge den Steuerungseinheiten (130 - 530) einer zweiten, von der Verzweigung ausgehenden Förderstrecke der Fördervorrichtung Busadressen zugewiesen werden.

5. Verfahren nach einem der vorhergehenden Ansprüche,
**dadurch gekennzeichnet, dass** mittels einer Benutzerschnittstelle des Einrichtungsrechners (40) zumindest ein Parameter zum Betrieb eines Förderantriebs (110 - 710) und/oder eines Sensors eingegeben wird, dieser Parameter derjenigen Steuerungseinheit (130 - 530), welche den Förderantrieb (110 - 710) bzw. Sensor ansteuert, zugewiesen und vorzugsweise über die Signalbusleitung (20) an diese Steuerungseinheit (130 - 530) übertragen wird.

6. Verfahren nach einem der vorhergehenden Ansprüche,
**dadurch gekennzeichnet, dass** der Signaleingang mittels eines Signalgebers ausgelöst wird, der an einen an der Steuerungseinheit (130 - 530) ausgebildeten Reed-Kontakt gehalten wird.

7. Verfahren nach einem der vorhergehenden Ansprüche,
**dadurch gekennzeichnet, dass** die Steuerungseinheit (130 - 530) an eine Stromversorgung angeschlossen wird, der Signaleingang ausgelöst wird, und das Auslösen eine Funktionsprüfung auslöst, in welcher ein an die Steuerungseinheit (130-530) angeschlossener Förderantrieb (110 - 710) für eine Förderbewegung angesteuert wird.

8. Verfahren nach einem der vorhergehenden Ansprüche,
**dadurch gekennzeichnet, dass** die Steuerungseinheit (130 - 530) an eine Stromversorgung angeschlossen wird, der Signaleingang ausgelöst wird, und das Auslösen eine Funktionsprüfung auslöst, in welcher die Funktionsfähigkeit eines an die Steuerungseinheit (130 - 530) angeschlossenen Sensors durch eine Signalausgabe, insbesondere eine optische Signalausgabe an der Steuerungseinheit (130-530) angezeigt wird.

9. Computerprogrammprodukt zur Ausführung auf einem Computer, welches ausgebildet ist, um ein Verfahren nach einem der vorhergehenden Ansprüche auszuführen, wenn es auf einem Computer ausgeführt wird.

10. Fördervorrichtung, umfassend eine Mehrzahl von Förderzonen (100 - 700), mit in jeder Förderzone (100 - 700) zumindest einem Förderantrieb (110 - 710), der signaltechnisch mit einer der Förderzone (100 - 700) zugeordneten Steuerungseinheit (130 - 530) gekoppelt ist, einem Signaldatenbus (20), welcher mit der Mehrzahl von Steuerungseinheiten (130 - 530) signaltechnisch gekoppelt ist,
**dadurch gekennzeichnet, dass** jede Steuerungseinheit (130 - 530) einen manuell betätigbaren Signaleingang, insbesondere einen Reed-Kontakt, umfasst und der jeweilige, manuell betätigbare Signaleingang ausgebildet ist, um eine Zuweisung einer individuellen Busadresse zu bewirken, indem auf einem Einrichtungsrechner (40), der dazu ausgebildet ist, die Fördervorrichtung mit den Steuerungseinheiten (130 - 530) und dem Signaldatenbus (20) auf einer graphischen Ausgabeeinrichtung virtuell wiederzugeben, eine Steuerungseinheit (130 - 530) einem Benutzer angegeben, insbesondere in der Wiedergabe der graphischen Ausgabeeinrichtung gekennzeichnet, wird, und der Steuerungseinheit die Busadresse zugewiesen wird, wenn der Signaleingang ausgelöst wird und die Steuerungseinheit mittels des Datenbusses mit dem Einrichtungsrechner signaltechnisch gekoppelt ist.

11. Fördervorrichtung nach Anspruch 10,
**dadurch gekennzeichnet, dass** der Einrichtungsrechner (40) ausgebildet ist, um in einem ersten Adresszuweisungsprozess eine erste Steuerungseinheit (130 - 530) anzugeben und dieser nach Auslösen ihres Signaleingangs eine Busadresse zuzuweisen und hierauf folgend eine zweite Steuerungseinheit (130 - 530), welche in der Fördervorrichtung benachbart zu der ersten Steuerungseinheit (130 - 530) angeordnet ist, anzugeben und dieser nach Auslösen des Signaleingangs eine Busadresse zuzuweisen.

12. Fördervorrichtung nach Anspruch 10 oder 11
**dadurch gekennzeichnet, dass** der Einrichtungsrechner (40) ausgebildet ist, um auf der graphischen Ausgabeeinheit mehrere Steuerungseinheiten (130 - 530) einer Förderstrecke oder eines Förderstreckenanteils darzustellen und eine Reihenfolge zu signalisieren, in welcher diesen mehreren Steuerungseinheiten (130 - 530) jeweils eine individuelle Busadresse zugewiesen werden soll.

13. Fördervorrichtung nach einem der vorhergehenden Ansprüche 10 - 12,
**dadurch gekennzeichnet, dass** der Einrichtungsrechner (40) ausgebildet ist, um auf der graphischen Ausgabeeinheit eine Fördervorrichtung mit einer Verzweigung wiederzugeben und um
- in einer ersten Schrittfolge den Steuerungseinheiten (130 - 530) einer ersten Förderstrecke der Fördervorrichtung jeweils individuelle Busadressen zuzuweisen und
- in einer zweiten Schrittfolge den Steuerungseinheiten (130 - 530) einer zweiten, von der Verzweigung ausgehenden Förderstrecke der Fördervorrichtung jeweils individuelle Busadressen zuzuweisen.

14. Fördervorrichtung nach einem der vorhergehenden Ansprüche 10 bis 13.
**dadurch gekennzeichnet, dass** die Steuerungseinheit (130 - 530) ausgebildet ist, um bei Auslösen des Signaleingangs in einer Anschlusssituation, in der die Steuerungseinheit (130 - 530) mit einer Energieversorgungsleitung verbunden ist, eine Funktionsprüfung durchzuführen, in welcher
- die Funktionsfähigkeit eines an die Steuerungseinheit (130 - 530) angeschlossenen Förderantriebs (110 - 710) durch eine Förderbewegung des Förderantriebs (110 - 710) angezeigt wird und/oder
- die Funktionsfähigkeit eines an die Steuerungseinheit (130 - 530) angeschlossenen Sensors durch eine Ausgabe eines Signals mittels der Signalmittel angezeigt wird.

## Claims

1. Method for setting up a conveyance device comprising a plurality of conveyor zones (100-700), of which at least one in each case has a conveyor drive (110-710) and a control unit (130-530) to control the conveyor drive (110-710), with the step:
- connecting the control units (130-530) to one another by means of a signal bus line (20),
**characterised by** the steps:
- virtual setting up of the conveyance device on a computer device (40), by each control unit (130-530) being virtually created on the computer device (40), the connection of the control units (130-530) based on signal technology being virtually defined on the computer device (40) by means of the bus line and a graphic output device of the computer device (40) being shown,
- provision of a signal input which can be manually triggered on each control unit (130-530),
- connection of the computer device (40) to the signal bus line (20),
- allocation of an individual bus address to each control unit (130-530), by
a. a single control unit (130-530) being indicated for a user on the computer device (40),
b. the signal input is triggered at the control unit (130-530) indicated on the computer device (40) and
c. as a result of the triggering of the control unit (130-530) a bus address is allocated,
whereby steps a-c are repeated until each control unit (130-530) has been allocated an individual bus address.

2. Method according to Claim 1,
**characterised in that** a bus address is allocated to a first control unit (130-530) and subsequently a bus address is allocated to a second control unit (130-530) which is adjacent to the first control unit (130-530) in the direction of flow.

3. Method according to Claim 1 or 2,
**characterised in that** several control units (130-530) in a conveyance area or in a section of a conveyance area are shown on the graphical output device and an order in which this plurality of control units (130-530) are to be allocated a bus address is signalled.

4. Method according to any one of the preceding claims,
**characterised in that** the conveyance device has a branch and **in that** in a first step sequence the control units (130-530) in a first conveyance area of the conveyance device are allocated bus addresses and in a second step sequence the control units (130-530) in a second conveyance area of the conveyance device away from the branch are allocated bus addresses.

5. Method according to any one of the preceding claims,
**characterized in that** a user interface in the computer device (40) can be used to input at least one parameter for the operation of a conveyor drive (110-710) and/or a sensor, allocates this parameter to that control unit (130-530) which controls the conveyor drive (110-710) or sensor and preferably transfers this control unit (130-530) by means of the signal bus line (20).

6. Method according to any one of the preceding claims,
**characterised in that** the signal input is triggered by means of a signal generator which is held on a Rccd contact formed on the control unit (130-530).

7. Method according to any one of the preceding claims,
**characterised in that** the control unit (130-530) is connected to an electricity supply which triggers the signal input and the triggering of which triggers a functional test in which a conveyor drive (110-710) connected to the control unit (130-530) is controlled for a conveyance movement.

8. Method according to any one of the preceding claims,
**characterised in that** the control unit (130-530) is connected to an electricity supply which triggers the signal input and the triggering of which triggers a functional test in which the functionality of a sensor connected to the control unit (130-530) is displayed by a signal output, in particular an optical signal output on the control unit (130-530).

9. Computer program product for implementation on a computer which is designed to implement a method according to any one of the preceding claims when it is run on a computer.

10. Conveyance device comprising a plurality of conveyance zones (100-700) having at least one conveyor drive (110-710) in each conveyance zone (100-700), which conveyor drive is coupled to one of the control units (130-530) allocated to the conveyance zone (100-700) using signal technology and a signal data bus (20) which is coupled to the plurality of control units (130-530) using signal technology, **characterised in that** each control unit (130-530) comprises a signal input which can be operated manually, in particular a Reed contact and the respective signal input which can be operated manually is formed to cause the allocation of an individual bus address by, on a computer device (40) which is designed for this, the conveyance device being reproduced virtually with the control units (130-530) and the signal data bus (20) on a graphical output device, a control unit (130-530) is indicated for a user, and in particular **characterised by** the reproduction of the graphical output device, and the bus address being allocated to the control unit when the signal input is triggered and the control unit being coupled to the device computer using signal technology via the data bus.

11. Conveyance device according to Claim 10,
**characterised in that** the computer device (40) is designed to indicate a first control unit (130-530) in a first address allocation process and after the triggering of its signal input to allocate a bus address and subsequently to indicate a second control unit (130-530) which is arranged adjacent to the first control unit (130-530) in the direction of flow and after the triggering of the signal input to allocate to this a bus address.

12. Conveyance device according to Claim 10 or 11,
**characterised in that** the computer device (40) is designed to display several control units (130-530) of a conveyance area or a section of a conveyance area on the graphical output device and to signal an order in which these several control units (130-530) are each to be allocated an individual bus address.

13. Conveyance device according to any one of Claims 10 to 12,
**characterised in that** the computer device (40) is designed to reproduce a conveyance device on the graphical output device with a branch
- and to allocated individual bus addresses in each case to the control units (130-530) in a first conveyance areas of the conveyance device in a first step sequence and
- in a second step sequence to allocated individual bus addresses in each case to the control units (130-530) in a second conveyance area of the conveyance device starting from the branch.

14. Conveyance device according to any one of Claims 10 to 13,
**characterised in that** the control unit (130-530) is designed to carry out a functional test on the triggering of the signal input in a connection situation in which the control unit (130-530) is connected to an energy supply line), in which functional test
- the functionality of a conveyor drive (110-710) connected to the control unit (130-530) is displayed by a conveyance movement of the conveyor drive (110-710) and/or
- the functionality of a sensor connected to the control unit (130-530) is displayed by the output of a signal by means of the signal generator.

## Revendications

1. Procédé de configuration d'un dispositif de convoyage, comprenant une pluralité de zones de convoyage (100 - 700), dont chacune comprend au moins un entraînement de convoyage (110 - 710) et une unité de commande (130 - 530) pour le pilotage de cet entraînement de convoyage (110-710), avec l'étape suivante :
- liaison des unités de commande (130 - 530) entre elles à l'aide d'une ligne de bus de signalisation (20),
**caractérisé par** les étapes suivantes :
- construction virtuelle du dispositif de convoyage sur un calculateur de configuration (40), en créant chaque unité de commande (130 - 530) virtuellement sur le calculateur de configuration (40), en définissant la liaison technique de signalisation des unités de commande (130 - 530) à l'aide de la ligne de bus virtuellement sur le calculateur de configuration (40) et en la représentant sur une unité de sortie graphique du calculateur de configuration (40),
- mise à disposition d'une entrée de signal déclenchable manuellement sur chaque unité de commande (130 - 530),
- liaison du calculateur de configuration (40) avec la ligne de bus de signalisation (20),
- attribution d'une adresse de bus individuelle à chaque unité de commande (130-530), en
a. indiquant, sur le calculateur de configuration (40), une unité de commande (130-530) déterminée à un utilisateur,
b. déclenchant la sortie de signaux sur l'unité de commande (130 - 530) indiquée sur le calculateur de configuration (40), et
c. attribuant une adresse de bus grâce au déclenchement de l'unité de commande (130-530),
les étapes a-c étant répétées jusqu'à ce qu'une adresse de bus individuelle soit attribuée à chaque unité de commande (130 - 530).

2. Procédé selon la revendication 1,
**caractérisé en ce qu'**à une première unité de commande (130 - 530), une adresse de bus est attribuée puis une adresse de bus est attribuée à une deuxième unité de commande (130 - 530) qui est adjacente dans le dispositif de convoyage à la première unité de commande (130 - 530).

3. Procédé selon la revendication 1 ou 2,
**caractérisé en ce que**, sur l'unité de sortie graphique, plusieurs unités de commande (130 - 530) d'un trajet de convoyage ou d'une partie de trajet de convoyage sont représentées et une séquence est signalisée, dans laquelle une adresse de bus doit être attribuée à ces plusieurs unités de commande (130 - 530).

4. Procédé selon l'une des revendications précédentes,
**caractérisé en ce que** le dispositif de convoyage présente un embranchement et **en ce que**, dans une première série d'étapes, des adresses de bus sont attribuées aux unités de commande (130 - 530) d'un premier trajet de convoyage du dispositif de convoyage et, dans une deuxième série d'étapes, des adresses de bus sont attribuées aux unités de commande (130 - 530) d'un deuxième trajet de convoyage du dispositif de convoyage, sortant de l'embranchement.

5. Procédé selon l'une des revendications précédentes,
**caractérisé en ce que**, à l'aide d'une interface utilisateur du calculateur de configuration (40), au moins un paramètre de fonctionnement d'un entraînement de convoyage (110 - 710) et/ou d'un capteur est entré, ce paramètre est attribué à l'unité de commande (130 - 530) qui commande l'entraînement de convoyage (110 - 710) ou le capteur, et de préférence transmis, par l'intermédiaire de la ligne de bus de signalisation (20), à cette unité de commande (130 - 530).

6. Procédé selon l'une des revendications précédentes,
**caractérisé en ce que** l'entrée de signalisation est déclenchée à l'aide d'un générateur de signaux qui est maintenu sur un contact reed prévu sur l'unité de commande (13-530).

7. Procédé selon l'une des revendications précédentes,
**caractérisé en ce que** l'unité de commande (130 - 530) est branchée à une alimentation électrique, l'entrée de signalisation est déclenchée et déclenche le déclenchement d'un contrôle de fonctionnement, dans lequel un entraînement de convoyage (110 - 710) branché à l'unité de commande (130 - 530) est commandé pour un mouvement de convoyage.

8. Procédé selon l'une des revendications précédentes,
**caractérisé en ce que** l'unité de commande (130 - 530) est branchée à une alimentation électrique, l'entrée de signalisation est déclenchée et déclenche le déclenchement d'un contrôle de fonctionnement, dans lequel la fonctionnalité d'un capteur branché à l'unité de commande (130 - 530) est affichée par une sortie de signal, plus particulièrement une sortie de signal optique sur l'unité de commande (130 - 530).

9. Produit logiciel destiné à être exécuté sur un ordinateur, qui est conçu pour réaliser un procédé selon l'une des revendications précédentes, lorsqu'il est exécuté sur un ordinateur.

10. Dispositif de convoyage comprenant une pluralité de zones de convoyage (100 - 700), avec, dans chaque zone de convoyage (100 - 700), au moins un entraînement de convoyage (110 - 710) qui est couplé, à l'aide de signaux, avec une unité de commande (130 - 530) attribuée à la zone de convoyage (100 - 700), un bus de données de signalisation (20), qui est couplé, à l'aide de signaux, avec la pluralité d'unités de commande (130 - 530),
**caractérisé en ce que** chaque unité de commande (130 - 530) comprend une entrée de signaux actionnable manuellement, plus particulièrement un contact reed et cette entrée de signaux actionnable manuellement est conçue pour provoquer une attribution d'une adresse de bus individuelle, en indiquant, sur un calculateur de configuration (40), qui est conçu pour représenter virtuellement le dispositif de convoyage avec les unités de commande (130 - 530) et le bus de données de signalisation (20) sur un dispositif de sortie graphique, une unité de commande (130 - 530) à un utilisateur, plus particulièrement identifié dans la représentation du dispositif de sortie graphique et en attribuant l'adresse de bus à l'unité de commande, lorsque l'entrée de signaux est déclenchée et l'unité de commande est couplée, à l'aide de signaux, au calculateur de configuration grâce au bus de données.

11. Procédé selon la revendication 10,
**caractérisé en ce que** le calculateur de configuration (40) est conçu pour indiquer, dans un premier processus d'attribution d'adresse, une première unité de commande (130 - 530) et lui attribuer, après le déclenchement de son entrée de signaux, une adresse de bus puis indiquer une deuxième unité de commande (130 - 530), qui est adjacente, dans le dispositif de convoyage, à la première unité de commande (130 - 530) et lui attribuer une adresse de bus après le déclenchement de l'entrée de signaux.

12. Dispositif de convoyage selon la revendication 10 ou 11,
caractérisé en cc que le calculateur de configuration (40) est conçu pour représenter, sur l'unité de sortie graphique, plusieurs unités de commande (130 - 530) d'un trajet de convoyage ou d'une partie d'un trajet de convoyage et pour signaliser une séquence, dans laquelle une adresse de bus individuelle doit être attribuée à ces plusieurs unités de commande (130 - 530).

13. Dispositif de convoyage selon l'une des revendications précédentes 10 à 12,
**caractérisé en ce que** le calculateur de configuration (40) est conçu pour représenter, sur l'unité de sortie graphique, un dispositif de convoyage avec un embranchement et pour
- attribuer, dans une première série d'étapes, des adresses de bus individuelles aux unités de commande (130 - 530) d'un premier trajet de convoyage du dispositif de convoyage et
- attribuer, dans une deuxième série d'étapes, des adresses de bus individuelles aux unités de commande (130 - 530) d'un deuxième trajet de convoyage du dispositif de convoyage, sortant de l'embranchement.

14. Dispositif de convoyage selon l'une des revendications précédentes 10 à 13,
**caractérisé en ce que** l'unité de commande (130 - 530) est conçue pour effectuer, lors du déclenchement de l'entrée de signaux dans une situation de branchement dans laquelle l'unité de commande (130 - 530) est reliée à une ligne d'alimentation, un contrôle de fonctionnement, dans lequel
- le fonctionnement d'un entraînement de convoyage (110 - 710) branché à 'unité de commande (130 - 530) est affiché par un mouvement de convoyage de l'entraînement de convoyage (110 - 710) et/ou
- le fonctionnement d'un capteur branché à l'unité de commande (130 - 530) est affiché par une sortie d'un signal à l'aide des moyens de signalisation.
